# EUROPEAN PATENT SPECIFICATION

(11) **EP 2 328 726 B1**
(45) Date of publication and mention of the grant of the patent: **15.02.2012**
(21) Application number: 09773806.6
(22) Date of filing: 02.07.2009
(51) Int. Cl.: B25J 19/02, E02B 17/00

(54) **AN APPARATUS FOR SPLASH ZONE OPERATIONS**
VORRICHTUNG FÜR SPRITZZONENARBEITSGÄNGE
APPAREIL POUR DES OPÉRATIONS EN ZONE D'ÉCLABOUSSEMENT

(30) Priority: 02.07.2008 NO 20082941
(43) Date of publication of application: 08.06.2011
(73) Proprietor: Linjebygg Offshore AS, 6405 Molde (NO)
(72) Inventor: GJELSTEN, Arve, 7038 Trondheim (NO); HÆGSTAD, Jon Anders, N-7089 Heimdal (NO); KARLSEN, Ståle, N-7092 Tiller (NO); BJØRNSEN, Geir Ingar, N-7027 Trondheim (NO); SCHJETNE, Bernt, N-7032 Trondheim (NO); HASLE, Martin, N-7024 Trondheim (NO)
(74) Representative: Smedseng, Øyvind
(86) International application number: PCT/NO2009/000249
(87) International publication number: WO 2010/002273

(56) References cited:
- EP-A- 0 547 685
- FR-A- 2 554 037
- US-A- 4 502 407
- US-A- 4 720 213

## Description

### Technical Field:

This invention regards an apparatus for splash zone operations and more particularly to a multi purpose robotic arm for maintenance and inspection of hard to reach places on an offshore installation like an ocean rig or a vessel.

### Background:

Offshore installations are on a daily basis exposed to some of the worst weather conditions in the world. Because of the harsh weather conditions, the need for inspections and maintenance work on these installations are a continually ongoing task. In today's situation the maintenance work is done either by personnel or remote operated vehicles, but because of the heavy weather restrictions concerning the protection of personnel and equipment the amount of tasks that can be done in certain areas on the installation is very limited. This means that maintenance and inspection in these areas is very hard and the need for work here is very high.

One of these areas is the splash zone, the splash zone is the zone from sea level and down to where the wave loads is a substantial factor.

For floating and jack up installations it is possible to take them to dock to do maintenance, this is, however, extremely expensive due to lost production and the cost of moving the installation.

Permanent installations have today only the method mentioned earlier which are either divers or remote operated vehicles. All these methods are expensive, dangerous and limited due to the cost of men and machines.

EP-A-0 547 685 discloses a system for maintenance and inspection of structures, the system comprising a remote controlled arm having a camera, in accordance with the preamble of claim 1.

### Summary

An object of the present invention is to solve the problems mentioned earlier and other limitations of the conventional solutions for maintenance and inspection of offshore installations.

Accordingly, the present invention provides a system as defined in claim 1.

The invention described in the independent claims and the thereto dependent claims, describe a mechanical access arm, connected to the main structure of the offshore installation, the arm can either be connected by a mechanical, magnetic, pneumatic and hydraulic way of fixing the arm to the structure or by any other kind of fixation device imaginable. For further stabilisation of the mechanical arm, the fixation device has at least one adjustable support beam attached to it that protrudes downward and works as a lever reducing the amount of stress both in parallel and perpendicular direction put on the structure at the fastening point.

Further the mechanical access arm is designed to penetrate the sea surface, and operate sub surface during worse weather conditions and wave loads significantly bigger than conventional techniques can handle.

The access arm is jointed in at least two places which make it easy to manipulate so that it reaches all places within the range of the arm. Further these joints make it easy to fold the access arm together so that it is easier to transport and reattach in another place.

At the end of the access arm there are mounted a working platform with changeable manipulator arms capable of performing different kind of operations. The fact that it is changeable means that it can either have a mechanical unit on the end for performing maintenance operations like, grinding, cutting and drilling, etc. It also makes it capable of performing advanced inspection work by placing inspection equipment at the end that includes but is in no way limited to, equipment for visual inspection, x-ray- and eddy current equipment.

The access arm and the fixation device is preferably mounted on a horizontally, but can also be mounted at an angle if there is no horizontal place to be found to place the system.

Further the access arm and the manipulator arm include a CCTV system for full video surveillance of the working operation so that all the operations can be done remotely. The CCTV system is also equipped with lights for illumination of the working space during night operations or operations under water.

The system has a control centre located on top of the offshore installation where personnel can perform the required tasks free from any danger and without any regards to the weather. This control centre has the complete control and manipulation of the system via screens and controls and a computer control unit to remotely operate the equipment. This control centre is also where the arm gets power for movement and the performance of all the equipment.

The installation of the equipment can be based on e.g. advanced rigging and rope access techniques or other kinds of portable equipment for fixing the arm to the structure. This means that the fixing of the arm does not relay on the permanent lifting equipment found on the offshore installation. This gives it a unique flexibility that gives it the opportunity to be operable regardless of other equipment that may be found on the installation.

### Brief description of the drawings

Figure 1 shows an embodiment of the invention in operation, mounted on an offshore installation.
Figure 2 shows a detailed view of the same embodiment as in figure 1.
Figure 3 and 4 show a detailed view of the fixation device with support beam, and also a detailed view of a joint in connection with the fixation device.
Figure 5 shows a detailed view of the joint separating the access arm in an inner and an outer arm.
Figure 6 shows a detailed view of the working platform with an inspection unit mounted on one end of the access arm.
Figure 7 shows a detailed view of the working platform with a maintenance unit mounted on one end of the access arm.
Figure 8 shows a detailed view of the control room of the system.
Figure 9 shows an embodiment of how the arm is installed on the offshore installation.

### Detailed description

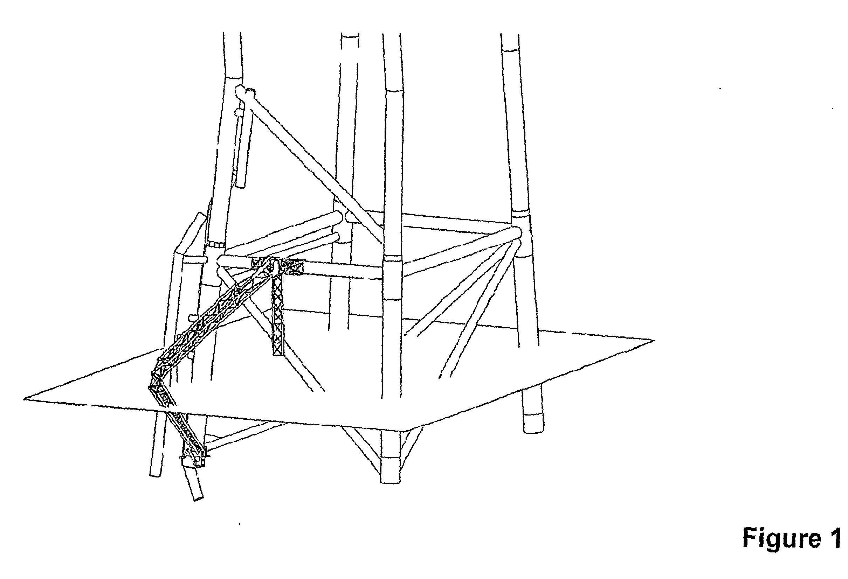

Figure 1 shows an embodiment of the invention in operation, here we see one end of the access arm mounted on a jacket structure on a permanent offshore installation. The access arm has a support beam protruding down giving extra support and works as a lever so that the fixing device on the end of the access arm does not destroy the structure it is mounted on. Further we see how the access arm is jointed in the middle making the access arm consist of two arms, an inner arm and an outer arm. The access arm is also jointed at the fixing device giving the access arm an action radius of the full length of the arm. These two joints give the access arm an extra flexibility making it possible to reach all destinations within the full length of the arm. Further we can see how the manipulator arm is working beneath the surface of the ocean.

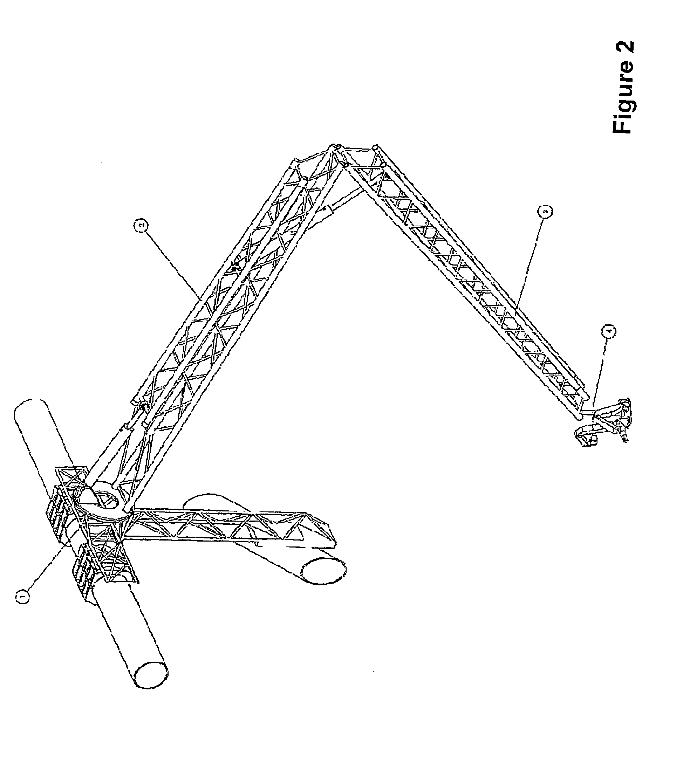

Figure 2 shows a detailed view of the main components of the invention. It consists of a fastening point [1] to the main structure. In this embodiment the fastening point consists of two clamps that are set around the jacket structure and fastened with bolts. Using two sets of clamps gives the fixing device extra support against forces working parallel to the two fastening points. The fastening points can consist of at any number of clamps and the fastening mechanism can be any kind of method for fastening the access arm to the main structure, e.g. mechanical, magnetic, pneumatic or a hydraulic mechanism. In figure 2 the fastening point of the access arm is above the water, but the arm can just as well have a fastening point that is below the sea level. In this embodiment the arm is made of truss work which is light weight and strong, but it can also be made of any other form of hard and resistant material. Further the arm has the ability to be extended using a telescopic extension of the arm.

A working platform [4] is mounted to the front of the access arm. The working platform is connected to the access arm in this embodiment by, a mechanical and hydraulic joint, but any other form of connection can be used. The working platform can either be set to be in a horizontal position at all time or it can be tilted and moved around by remote control from the operating room.

Further it can be seen in figure 2 a support beam consisting of an arm made of truss work with a padded section, in form of a bumper plate, at the end that rests on a below lying structure. This support beam reduces the stress on the structure from the forces working perpendicular to the fastening points. The support beam can be made of a range of different materials and it can even be more than one support beam placed at an angle to each other.

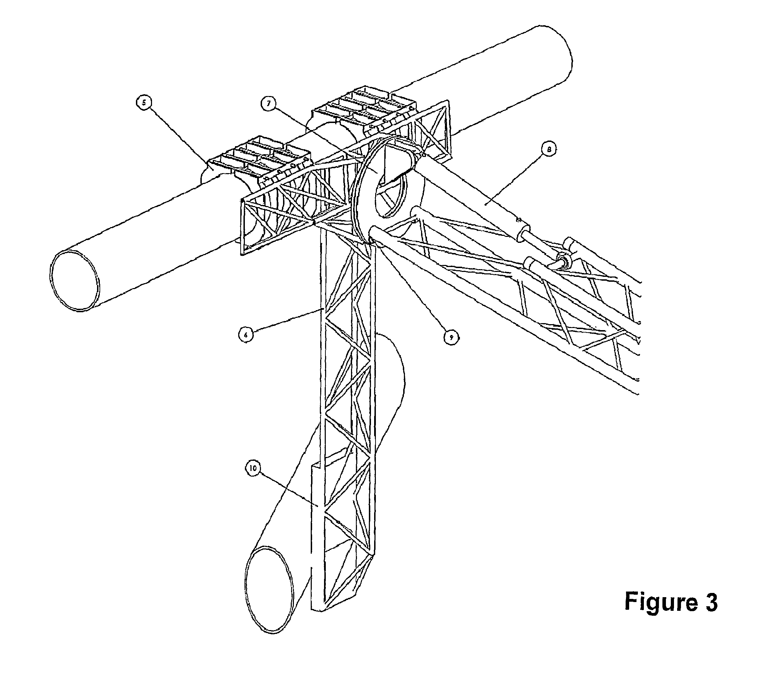

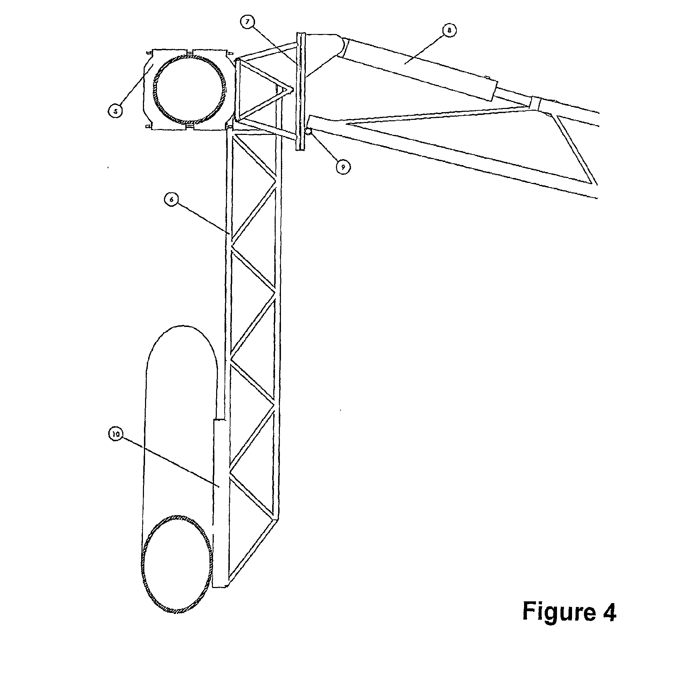

Figure 3 and figure 4 show detailed pictures of the mechanical fastening mechanism. The mechanism consists of two bolted clamps [5] connected with a T-shaped structure [6]. The two clamps will take moment perpendicular to the main platform structure. The stem of the T is strapped to an additional structure by jacking straps to take moment forces along the main platform structure. A slewing ring [7] connects the access arm to the T-structure. The movement of the joint is operated by at least one hydraulic cylinder [8]. The access arm is connected to the slewing ring [7] by slide bearings [9]. A bumper plate [10] is attached to the stem of the T to prevent mechanical damage of the structures.

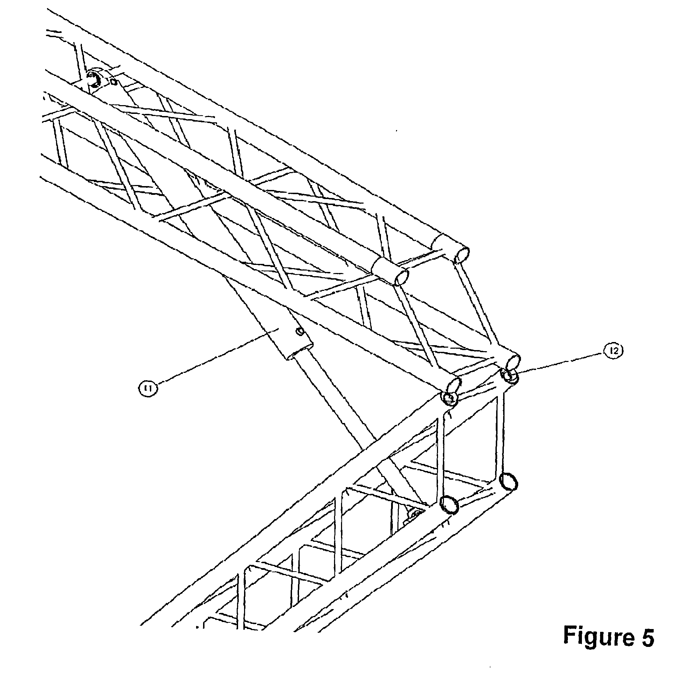

Figure 5 shows the joint between the inner arm [2] and the outer arm [3]. The movement of the arm is performed by a hydraulic cylinder [11], and the arms are connected by slide bearings [12].

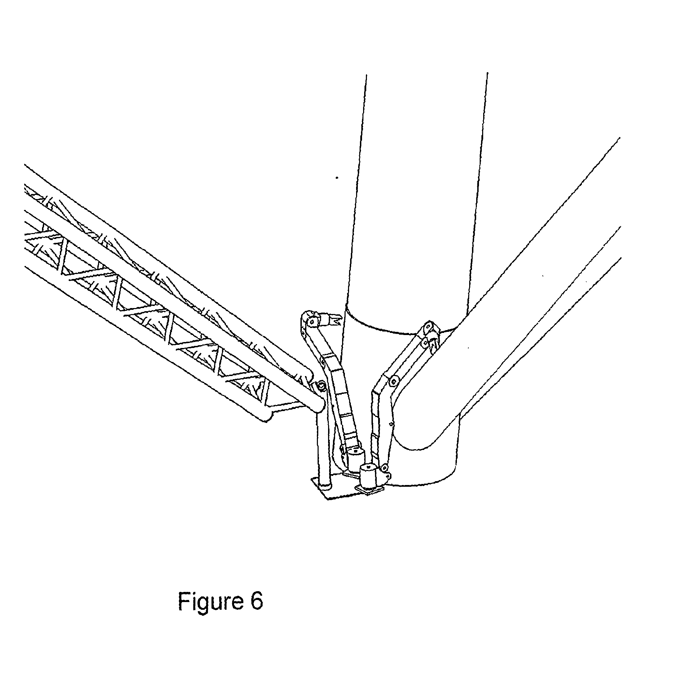

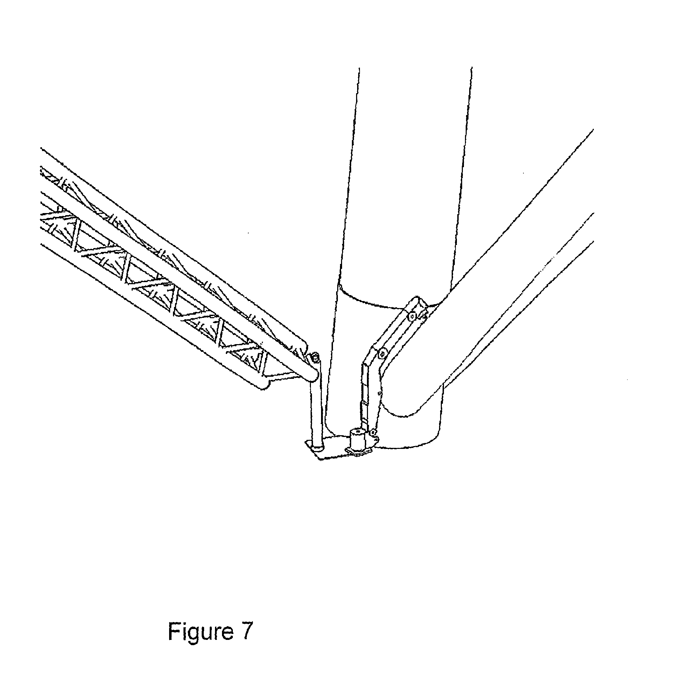

Figure 6 and Figure 7 show a detailed picture of the access arm performing work on and sub sea offshore structure. On the working platform there are mounted at least one manipulator arms [4]. The manipulator arms perform mechanical operations, including, but not limited to, grinding, cutting, drilling, etc. The system is also designed to perform inspection, including but not limited to, visual inspection, x-ray and eddy current.

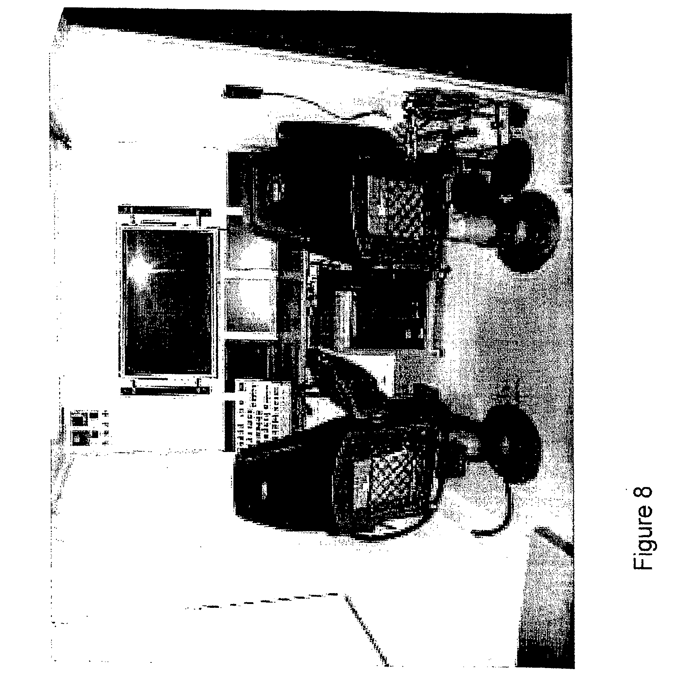

Figure 8 gives a view of the top side platform with the control room, the control room is the centre of operation and is where the arm is controlled and is the supplier of power to the access arm and the work platform. The signalling that controls the operation can either be via a wire or it can be wireless.

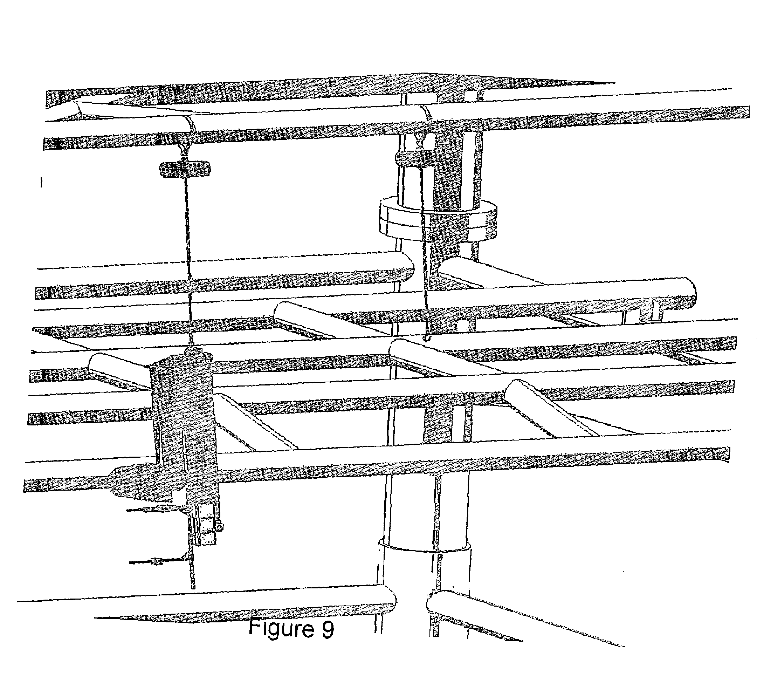

Figure 9 shows how the arm is installed on the offshore installation, as it can be seen in this embodiment it can be used a system of ropes and pulleys, but it can also be used other types of rigging equipment.

## Claims

1. System for maintenance and inspection of structures located in hard to reach places, comprising a remote controlled arm and an arrangement for fixing said remote controlled arm to the structure, said remote controlled arm having the ability to change working equipment, said remote controlled arm comprising at least two joints and having a camera and being controlled from a control centre, the system being **characterized in that** said remote controlled arm comprises an inner joint comprising a slewing ring (7) capable of rotating the entire arm, and an outer joint which is a hinged joint that separates the arm in an inner arm (2) and outer arm (3).

2. System for maintenance and inspection of structures according to claim 1, **characterized in that** said slowing ring (7) connects the remote controlled arm to an arrangement for fixing said arm to a structure.

3. System for maintenance and inspection of structures according to claim 1, **characterized in that** said remote controlled arm is connected to the slewing ring (7) by slide bearings (9), and at least one hydraulic cylinder (8)_{.}

4. System for maintenance and inspection of structures according to claim 1, **characterized in that** said arrangement for fixing said arm to a structure consists of at least one fixing point (1).

5. System for maintenance and inspection of structures according to preceding claims, **characterized in that** said arrangement for fixing said remote controlled arm to the structure has at least one support beam (6) and that said support beam can have adjustable length.

6. System for maintenance and inspection of structures according to claim 5, **characterized in that** said at least one support beam can have an adjustable angle.

7. System for maintenance and inspection of structures according to claim 1, **characterized in that** said arm can have adjustable length.

8. System for maintenance and inspection of structures according to claim 1, **characterized in that** said working platform can change working equipment for performing both maintenance and inspection task.

9. System for maintenance and inspection of structures according to claim 1, **characterized in that** said camera connection is a CCTV connection, with possibilities for illuminating the workspace.

10. System for maintenance and inspection of structures according to claim 1, **characterized in that** said control centre controls the movement of the arm.

11. System for maintenance and inspection of structures according to claim 10, **characterized in that** said control centre provides the arm with power for operation.

## Patentansprüche

1. System zur Instandhaltung und Inspektion von an schwer erreichbaren Orten angeordneten Strukturen, umfassend einen ferngesteuerten Arm und eine Anordnung zum Befestigen des ferngesteuerten Arms an der Struktur, wobei der ferngesteuerte Arm Arbeitsgeräte wechseln kann, wenigstens zwei Verbindungsstücke und eine Kamera aufweist und von einem Kontrollzentrum aus gesteuert ist, **dadurch gekennzeichnet, dass** der ferngesteuerte Arm ein inneres Verbindungsstück mit einem Schwenkring (7), der den gesamten Arm verschwenken kann, und ein äußeres Verbindungsstück umfasst, das ein Scharniergelenk ist, welches den Arm in einen inneren (2) Arm und einen äußeren Arm (3) teilt.

2. System zur Instandhaltung und Inspektion von Strukturen nach Anspruch 1, **dadurch gekennzeichnet, dass** der Schwenkring (7) den ferngesteuerten Arm mit einer Anordnung zum Befestigen des Arms an einer Struktur verbindet.

3. System zur Instandhaltung und Inspektion von Strukturen nach Anspruch 1, **dadurch gekennzeichnet, dass** der ferngesteuerte Arm mit dem Schwenkring über Gleitlager (9) und wenigstens einen Hydraulikzylinder (8) verbunden ist.

4. System zur Instandhaltung und Inspektion von Strukturen nach Anspruch 1, **dadurch gekennzeichnet, dass** die Anordnung zum Befestigen des Arms an einer Struktur aus wenigstens einem Befestigungspunkt (1) besteht.

5. System zur Instandhaltung und Inspektion von Strukturen nach einem der vorstehenden Ansprüche, **dadurch gekennzeichnet, dass** die Anordnung zum Befestigen des ferngesteuerten Arms an der Struktur wenigstens einen Stützbalken (6) aufweist und dass die Länge des Stützbalkens einstellbar ist.

6. System zur Instandhaltung und Inspektion von Strukturen nach Anspruch 5, **dadurch gekennzeichnet, dass** der wenigstens eine Stützbalken einen einstellbaren Winkel aufweist.

7. System zur Instandhaltung und Inspektion von Strukturen nach Anspruch 1, **dadurch gekennzeichnet, dass** die Länge des Arms einstellbar ist.

8. System zur Instandhaltung und Inspektion von Strukturen nach Anspruch 1, **dadurch gekennzeichnet, dass** die Arbeitsplattform Arbeitsgeräte wechseln kann, um sowohl Instandhaltungs- als auch Inspektionsaufgaben durchzuführen.

9. System zur Instandhaltung und Inspektion von Strukturen nach Anspruch 1, **dadurch gekennzeichnet, dass** die Kameraverbindung eine Videoüberwachungsverbindung mit Möglichkeiten zur Beleuchtung des Arbeitsbereichs ist.

10. System zur Instandhaltung und Inspektion von Strukturen nach Anspruch 1, **dadurch gekennzeichnet, dass** das Kontrollzentrum die Bewegung des Arms steuert.

11. System zur Instandhaltung und Inspektion von Strukturen nach Anspruch 10, **dadurch gekennzeichnet, dass** das Kontrollzentrum den Arm mit Energie für dessen Betrieb versorgt.

## Revendications

1. Système de maintenance et d'inspection de structures situées dans des endroits difficiles à atteindre, comprenant un bras commandé à distance et un agencement pour fixer ledit bras commandé à distance à ladite structure, ledit bras commandé à distance ayant la capacité de changer un équipement de travail, ledit bras commandé à distance comprenant au moins deux liaisons et ayant une caméra et étant commandé à partir d'un centre de commande, le système étant **caractérisé en ce que** ledit bras commandé à distance comprend une liaison intérieure comprenant une couronne pivotante (7) capable de faire tourner le bras complet, et une liaison extérieure qui est une liaison articulée qui sépare le bras en un bras intérieur (2) et un bras extérieur (3).

2. Système de maintenance et d'inspection de structures selon la revendication 1, **caractérisé en ce que** ladite couronne pivotante (7) relie le bras commandé à distance à un agencement pour fixer ledit bras à une structure.

3. Système de maintenance et d'inspection de structures selon la revendication 1, **caractérisé en ce que** ledit bras commandé à distance est relié à la couronne pivotante (7) par des paliers à glissement (9), et au moins un vérin hydraulique (8).

4. Système de maintenance et d'inspection de structures selon la revendication 1, **caractérisé en ce que** ledit agencement pour fixer ledit bras à une structure consiste en au moins un point de fixation (1).

5. Système de maintenance et d'inspection de structures selon les revendications précédentes, **caractérisé en ce que** ledit agencement pour fixer ledit bras commandé à distance à la structure a au moins une poutre de support (6) et que ladite poutre de support peut avoir une longueur réglable.

6. Système de maintenance et d'inspection de structures selon la revendication 5, **caractérisé en ce que** ladite au moins une poutre de support peut avoir un angle réglable.

7. Système de maintenance et d'inspection de structures selon la revendication 1, **caractérisé en ce que** ledit bras peut avoir une longueur réglable.

8. Système de maintenance et d'inspection de structures selon la revendication 1, **caractérisé en ce que** ladite plate-forme de travail peut changer un équipement de travail pour exécuter une tâche à la fois de maintenance et d'inspection.

9. Système de maintenance et d'inspection de structures selon la revendication 1, **caractérisé en ce que** ladite liaison par caméra est une liaison CCTV, avec des possibilités d'éclairage de l'espace de travail.

10. Système de maintenance et d'inspection de structures selon la revendication 1, **caractérisé en ce que** ledit centre de commande commande le mouvement du bras.

11. Système de maintenance et d'inspection de structures selon la revendication 10, **caractérisé en ce que** ledit centre de commande fournit au bras de la puissance pour un actionnement.
